(19) **Europäisches Patentamt European Patent Office Office européen des brevets**

(11) **EP 4 760 850 A1**

(12) **EUROPEAN PATENT APPLICATION**
published in accordance with Art. 153(4) EPC

(43) Date of publication:
**17.06.2026 Bulletin 2026/25**

(21) Application number: **24888974.3**

(22) Date of filing: **21.10.2024**

(51) International Patent Classification (IPC):
$H01M\ 10/058^{(2010.01)}$   $H01M\ 10/44^{(2006.01)}$
$H01M\ 10/052^{(2010.01)}$   $H01M\ 4/04^{(2006.01)}$
$H01M\ 4/505^{(2010.01)}$   $H01M\ 4/525^{(2010.01)}$
$H01M\ 4/1391^{(2010.01)}$   $H01M\ 4/02^{(2006.01)}$

(52) Cooperative Patent Classification (CPC):
**H01M 4/02; H01M 4/04; H01M 4/1391;
H01M 4/505; H01M 4/525; H01M 10/052;
H01M 10/058; H01M 10/44;** Y02E 60/10

(86) International application number:
**PCT/KR2024/015942**

(87) International publication number:
**WO 2025/100781 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.11.2023   KR 20230151843
21.11.2023   KR 20230162051
18.10.2024   KR 20240142767**

(71) Applicant: **LG Energy Solution, Ltd.
Seoul 07335 (KR)**

(72) Inventors:
• **JANG, Daeun
Daejeon 34122 (KR)**

• **SUNG, Kiwon
Daejeon 34122 (KR)**
• **KANG, Bohyun
Daejeon 34122 (KR)**
• **HAN, Myoung Hun
Daejeon 34122 (KR)**
• **KIM, Jeongmin
Daejeon 34122 (KR)**
• **LEE, Byoungsoo
Daejeon 34122 (KR)**
• **LEE, Yung Jong
Daejeon 34122 (KR)**

(74) Representative: **Hoffmann Eitle
Patent- und Rechtsanwälte PartmbB
Arabellastraße 30
81925 München (DE)**

(54) **METHOD FOR ACTIVATING LITHIUM SECONDARY BATTERY**

(57)   The present invention relates to a method for activating a lithium secondary battery, which comprises a positive electrode, a negative electrode and an electrolyte, wherein the lithium secondary battery includes a positive electrode active material made of lithium metal oxide containing 50 mol% or more and less than 100 mol% of manganese based on the total metal content excluding lithium, the method comprising: activating the lithium secondary battery by a CC-CV charging method in which constant current(CC) charging is performed until a specified state of charge(%SOC) is reached, and then constant voltage(CV) charging is performed, wherein the CC-CV charging of the activation step is ended at a time point when the activation charge depth defined by the following equation 1 becomes 5.17% to 15.00%.

Activation charge depth (%) = (Charge capacity of the CV charge section / Total charge capacity of the activation step) * 100   [Equation 1]

EP 4 760 850 A1

[FIG. 1]

**Description**

**[TECHNICAL FIELD]**

Cross-Reference to Related Application(s)

This application claims the benefit of priority to Korean Patent Application No. 10-2023-0151843, filed on November 6, 2023, Korean Patent Application No. 10-2023-0162051, filed on November 21, 2023, and Korean Patent Application No. 10-2024-0142767, filed on October 18, 2024, with the Korean Intellectual Property Office, the disclosures of which are incorporated herein by reference in their entirety.

The present disclosure relates to a method for activating a lithium secondary battery which allows a lithium secondary battery containing a manganese-rich positive electrode material to sufficiently exhibit high-capacity characteristics of the positive electrode material, reduces the amount of gas generation and the amount of transition metal elution from the lithium secondary battery, and enables stable driving of the battery.

**[BACKGROUND]**

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The lithium secondary battery generally consists of a positive electrode containing a positive electrode active material, a negative electrode containing a negative electrode active material, an electrolyte that serves as a medium for transferring lithium ions, and a separator. At this time, lithium transition metal oxides such as lithium cobalt oxide, lithium nickel oxide, and lithium nickel-cobalt-manganese composite oxide are mainly used as the positive electrode active material.

However, in order to reduce the unit price of the positive electrode active material and increase the energy density and capacity of the lithium secondary battery, lithium-rich and manganese-rich oxides have recently been attracting attention as a next-generation positive electrode active material. Lithium-rich and manganese-rich oxides can have a relatively low production cost by increasing the content of manganese(Mn), which is relatively inexpensive and has abundant reserves, and decreasing the content of cobalt(Co).

Further, the lithium-rich and manganese-rich oxides can contribute to exhibiting the capacity of the positive electrode active material and the secondary battery not only through the oxidation/reduction reaction of metal cations but also through the oxidation/reduction (redox) reaction of oxygen anions. Therefore, the lithium-rich and manganese-rich oxides may have a high theoretical reversible capacity and energy density of 250 mAh/g or more.

However, it is known that in order to exhibit the high capacity characteristics of the lithium-rich and manganese-rich oxides, it is necessary for the lithium secondary battery containing the same to perform an initial activation process under high voltage by utilizing the potential flat section that is confirmed by charging at 4.3 V or more. In particular, if the initial activation process under high voltage is not properly performed, abnormal driving phenomena may occur, for example, the high capacity characteristics and energy density unique to the lithium-rich and manganese-rich oxides are not be properly utilized, or the capacity retention of a lithium secondary battery containing the same exceeds 100% during driving.

Further, while passing through the initial activation process under high voltage, problems may occur, such as oxygen being desorbed from the positive electrode crystal structure, generating excessive activation gas, or large amounts of transition metals such as manganese being eluted from the positive electrode. Therefore, if the conditions for the activation process are not optimized, the cell performance may be decreased, such as an increase in the resistance of the lithium secondary battery.

Therefore, advancing an appropriate activation process for the lithium secondary battery containing the lithium-rich and manganese-rich oxides has become one of the major technical challenges.

**[DETAILED DESCRIPTION OF THE INVENTION]**

**[Technical Problem]**

It is an object of the present disclosure to provide a method for activating a lithium secondary battery which allows a lithium secondary battery containing a manganese-rich positive electrode material to sufficiently exhibit high-capacity characteristics of the positive electrode material, reduces the amount of gas generation and the amount of transition metal elution from the lithium secondary battery, and enables stable driving of the battery.

**[Technical Solution]**

According to an embodiment of the present disclosure, there is provided a method for activating a lithium secondary battery comprising a positive electrode, a negative electrode and an electrolyte, wherein the lithium secondary battery includes a positive electrode active material made of lithium metal oxide containing 50 mol% or more and less than 100 mol% of manganese based on the total metal content excluding lithium, the method comprising:

activating the lithium secondary battery by a CC-CV charging method in which constant current(CC) charging is performed until a specified state of charge(%SOC) is reached, and then constant voltage(CV) charging is performed, wherein the CC-CV charging of the activation step is ended at a time point when the activation charge depth defined by the following equation 1 becomes 5.17% to 15.00%.

Activation charge depth (%) = (Charge capacity of the CV charge section / Total charge capacity of the activation step) * 100          [Equation 1]

In the activation method of one embodiment, the lithium metal oxide includes a lithium-rich and manganese-rich oxide, for example, a compound represented by the following Chemical Formula 1:

[Chemical Formula 1]          $Li_a[Mn_{1-b-c}Ni_bM_c]_{2-a}O_2$

wherein in Chemical Formula 1,

M is at least one selected from the group consisting of Co, Fe, Cr, V, Cu, Zn, Ti, Al, Mg, B, W, Ga, In, Ru, Nb, Sn, Sr and Zr, and
a, b, and c are atomic fractions of each independent elements, wherein $1<a$, $0\leq b\leq0.5$, $0\leq c\leq0.5$, and $0<b+c\leq0.5$.

**[Advantageous Effects]**

According to the activation method of one embodiment, for example, when initially charging and activating a lithium secondary battery containing a manganese-rich oxide-based positive electrode active material, a CC-CV charging method is applied, among which, the constant voltage(CV) charging after the constant current(CC) charging is ended at a time point when the activation charge depth defined by a predetermined relational formula satisfies a certain ratio. In a further configuration, in the activation method, the constant voltage(CV) charging time after the constant current(CC) charging can be adjusted to a certain ratio.
According to the activation method of one embodiment to which such an initial charge is applied, it has been confirmed that the manganese-rich oxide-based positive electrode active material, for example, the lithium manganese oxide with a rock salt structure contained therein, can be effectively activated to exhibit high capacity characteristics of the positive electrode active material.
It has also been confirmed that the lithium secondary battery in which the activation method of one embodiments has been progressed can be driven stably without occurrence of abnormal drive cycles and thus exhibit excellent cycle characteristics, such as the capacity retention exceeding 100% during charge/discharge driving.
In addition, it has been confirmed that the amount of gas generation and the amount of transition metal elution during the activation process can be reduced as the constant voltage charging time is adjusted to a certain ratio.

**[BRIEF DESCRIPTION OF THE DRAWING]**

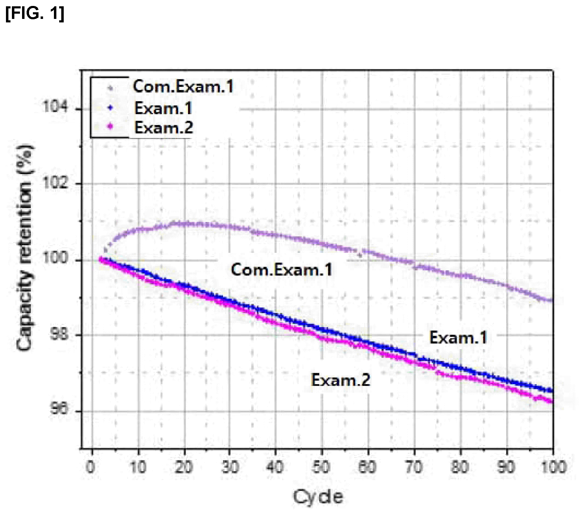

FIG. 1 is a graph showing the results of comparing and evaluating the driving characteristics and capacity retention for each cycle for the lithium secondary batteries manufactured through the activation process of Examples and Comparative Examples.

**[DETAILED DESCRIPTION OF THE EMBODIMENTS]**

Hereinafter, a method for activating a lithium secondary battery according to embodiments of the present disclosure will be described in more detail.
Manganese-rich oxide-based positive electrode active material having manganese content of 50 mol% or more among all metals excluding lithium, for example, lithium-rich and manganese-rich oxide-based positive electrode active material, not only has a higher energy density than the currently commercialized lithium nickel cobalt manganese(NCM)-based positive electrode active material, but also has the advantage of being able to reduce the amount of expensive cobalt used, thereby saving the unit manufacturing cost.

By the way, such a lithium-rich and manganese-rich oxide-based positive electrode active material has a structure in which lithium manganese oxide ($Li_2MnO_3$) having a rock salt structure and lithium transition metal oxide (e.g., $Li[Ni_{1-y-z-w}Mn_yCo_zM_w]O_2$) having a layered structure are mixed, and the compound with a rock salt structure can be activated by the activation process before the driving of the lithium secondary battery, thereby exhibiting higher capacity characteristics.

Consequently, for the lithium secondary battery comprising lithium-rich and manganese-rich oxide-based positive electrode active material, it is very important to optimize the conditions for the activation process and exhibit higher capacity characteristics. If the activation process is not properly performed and the rock salt-structured compound is not properly activated, the rock salt-structured compound may be abnormally activated in the charge/discharge process for driving the lithium secondary battery, which results in abnormal driving phenomena such as the capacity retention exceeding 100% during the initial cycle driving.

The activation method of one embodiment is to solve this problem, and when initially charging and then activating the lithium secondary battery by the CC-CV charging method, the main configuration is that the constant voltage(CV) charging after the constant current(CC) charging is ended at a time point when the activation charge depth defined by the following Equation 1, i.e., the ratio of the charge capacity of the constant voltage(CV) charging section to the total charge capacity of the activation step, is about 5.17% to 15.00%, or about 6.00% to 14.00%, or about 7.00% to 13.00%.

$$\text{Activation charge depth (\%)} = (\text{Charge capacity of the CV charge section} / \text{Total charge capacity of the activation step}) * 100 \qquad \text{[Equation 1]}$$

As supported by Examples provided hereinafter, etc., it has been confirmed that it is possible to optimize the ratio of progress of the constant voltage(CV) charging section to effectively activate the manganese-rich oxide-based positive electrode active material, for example, the rock salt-structured compound, thereby exhibiting higher capacity characteristics, while it is possible to suppress abnormal driving phenomena such as a capacity retention exceeding 100% during driving of a lithium secondary battery including the same.

This is expected because, for example, as the ratio of progress of the constant voltage(CV) charging section that is proceeded under a high voltage of 4.4V to 4.7V, or 4.5V to 4.65V is optimized, the rock salt-structured compound is effectively activated in the corresponding high voltage charging process, and as a result, abnormal driving cycles due to abnormal activation do not occur during driving of the lithium secondary battery.

Next, the activation method of one embodiment will be described in more detail.

The lithium secondary battery for proceeding the activation method of one embodiment includes a manganese-rich oxide-based positive electrode active material made of a lithium metal oxide containing 50 mol% or more and less than 100 mol% of manganese based on the total metal content excluding lithium. Such a manganese-rich oxide-based positive electrode active material may be a lithium-rich and manganese-rich metal oxide represented by the following Chemical Formula 1:

[Chemical Formula 1] $\qquad Li_a[Mn_{1-b-c}Ni_bM_c]_{2-a}O_2$

wherein in Chemical Formula 1,

M is at least one selected from the group consisting of Co, Fe, Cr, V, Cu, Zn, Ti, Al, Mg, B, W, Ga, In, Ru, Nb, Sn, Sr and Zr, and

a, b, and c are atomic fractions of each independent elements, wherein $1<a$, $0 \leq b \leq 0.5$, $0 \leq c \leq 0.5$, and $0 < b+c \leq 0.5$.

Specifically, the a is a molar ratio of Li in the lithium-rich and manganese-rich oxide, which may be $1<a$, $1.1 \leq a \leq 1.5$, or $1.2 \leq a \leq 1.4$. When a satisfies the above range, high capacity can be achieved.

The b is a molar ratio of Ni in the lithium-rich and manganese-rich oxide, which may be $0 \leq b \leq 0.5$, $0.1 \leq b \leq 0.4$ or $0.2 \leq b \leq 0.4$.

The c is a molar ratio of an additional element M in the lithium-rich and manganese-rich oxide, which may be $0 \leq c \leq 0.5$, $0 \leq c \leq 0.3$, or $0 \leq c \leq 0.1$. The M may be, for example, Co, and if the content of the additional element is too high, it may not only adversely affect the capacity characteristics, but also may aggravate gas generation and deterioration of the positive electrode active material due to an increase in the oxygen oxidation-reduction reaction, which may result in a decrease in the lifetime characteristics.

The 1-b-c is a molar ratio of Mn in the lithium-rich and manganese-rich oxide, which may be $0.50 \leq 1-b-c < 1.0$, $0.50 \leq 1-b-c \leq 0.80$, or $0.50 \leq 1-b-c \leq 0.70$. When the 1-b-c is less than 0.5, that is, when b+c exceeds 0.5, the ratio of the rock salt structure is reduced, so that the negative electrode irreversible compensation and capacity improvement effects may be small.

Meanwhile, in the case of the lithium-rich and manganese-rich oxide containing excessive lithium together with 50 mol% or more of manganese among the metals excluding lithium, it may have a structure in which a layered structured compound ($LiM'O_2$) and a rock salt-structured compound ($Li_2MnO_3$) are mixed. Among these, the rock salt-structured compound is activated, for example, at a high voltage of 4.4 V or more to generate excessive ions. Therefore, when the lithium-rich and manganese-rich oxide is used as a positive electrode active material, the excessive lithium ions generated by the activation of the rock salt phase in the high-voltage activation process are inserted into the negative electrode, thereby obtaining a pre-lithiation effect in which the irreversible capacity of the negative electrode is compensated. However, depending on the activation conditions, some rock salt phases may remain in a non-activated state. If this non-activated residual rock salt phase is not large, it may be further activated during the driving of the lithium secondary battery and contribute to improving the capacity retention of the lithium secondary battery.

However, if the activation is not performed properly and the non-activated residual rock salt phase is contained in large amounts, an abnormal cycle in which the capacity retention exceeds 100% during the driving of the lithium secondary battery may occur, which may lead to an abnormal driving phenomenon of the lithium secondary battery. As mentioned above, according to the activation method of one embodiment, since the rock salt phase is sufficiently activated, problems such as the abnormal driving phenomenon can be suppressed.

In a more specific example, the lithium metal oxide, for example, the lithium-rich and manganese-rich oxide may include $Li_2MnO_3$ having a rock salt structure and $Li[Ni_{1-y-z-w}Mn_yCo_zM_w]O_2$ having a layered structure in a mixed state, and may be represented by the following Chemical Formula 2:

$$[\text{Chemical Formula 2}] \qquad X*Li_2MnO_3 \cdot (1-X)*Li[Ni_{1-y-z-w}Mn_yCo_zM_w]O_2$$

wherein in Chemical Formula 2,

M is at least one selected from the group consisting of Fe, Cr, V, Cu, Zn, Ti, Al, Mg, B, W, Ga, In, Ru, Nb, Sn, Sr and Zr, wherein $0.2 \leq X \leq 0.5$, $0.4 \leq y < 1$, $0 \leq z \leq 0.1$, and $0 \leq w \leq 0.2$.

In this Chemical Formula 2, the X means the ratio of $Li_2MnO_3$ phase (rock salt phase) in the lithium-rich and manganese-rich oxide, wherein $0.2 \leq X \leq 0.5$, $0.25 \leq X \leq 0.5$, or $0.25 \leq X \leq 0.4$. When the ratio of $Li_2MnO_3$ phase satisfies the above range, high capacity characteristics can be achieved.

The y may be a molar ratio of Mn in $LiM'O_2$ ($M' = [Ni_{1-y-z}Mn_yM_z]$; layered), wherein $0.4 \leq y < 1$, $0.4 \leq y \leq 0.8$, or $0.4 \leq y \leq 0.7$.

The z may be a molar ratio of an additional element M in $LiM'O_2$ ($M' = [Ni_{1-y-z}Mn_yM_z]$; layered), wherein $0 \leq z \leq 0.5$, $0 \leq z \leq 0.3$, or $0 \leq z \leq 0.1$.

Meanwhile, the above-mentioned lithium-rich and manganese-rich oxide-based positive electrode active material may be in the form of secondary particles in which a plurality of primary particles are aggregated, and the average particle diameter $D_{50}$ of the secondary particles may be 2 $\mu$m to 10 $\mu$m, preferably 2 $\mu$m to 8 $\mu$m, and more preferably 4 $\mu$m to 8 $\mu$m. When the $D_{50}$ of the positive electrode active material satisfies the above range, the electrode density can be excellently achieved, and the deterioration of capacity and rate characteristics can be minimized.

Further, the above-mentioned positive electrode active material may have a BET specific surface area of 0.1 m²/g to 10 m²/g, specifically 0.1 m²/g to 5 m²/g, and more specifically 0.1 m²/g to 1 m²/g. If the BET specific surface area of the positive electrode active material is too low, the reaction area with the electrolyte is insufficient, which makes it difficult to achieve sufficient capacity, and if the specific surface area is too high, moisture absorption is fast, and side reactions with the electrolyte are accelerated, which makes it difficult to ensure lifetime characteristics.

The lithium-rich and manganese-rich oxide can be prepared by mixing a transition metal precursor and a lithium raw material and then calcinating them, and the types of each precursor and raw material and the preparation conditions may be based on the preparation conditions for a typical manganese-rich oxide-based positive electrode active material, and therefore, further description thereof will be omitted.

Meanwhile, the lithium secondary battery may have a configuration of a typical lithium secondary battery, except that the lithium-rich and manganese-rich oxide is used as a positive electrode active material, and may be prepared by a method well known to those skilled in the art. For example, the lithium secondary battery can be produced by interposing a separator (or electrolyte membrane) between a positive electrode containing a positive electrode active material and a negative electrode containing a negative electrode active material, sequentially stacking and drying them to prepare an electrode assembly, inserting the electrode assembly into a case, and selectively injecting an electrolyte and sealing the case. The lithium secondary battery may be cylindrical, prismatic, coin-shaped, or pouch-shaped batteries.

The positive electrode and the negative electrode may be produced by coating a composition for forming an active material layer including an electrode active material onto a current collector and then drying the coating.

The composition for forming the positive electrode active material layer may, in addition to the positive electrode active material, optionally further include a binder, a conductive material, a filler, and the like, if necessary. The composition for forming the positive electrode active material layer may, in addition to the lithium-rich and manganese-rich oxide-based positive electrode active material, optionally further include a binder, a conductive material, a filler, and the like, if necessary. The composition for forming the negative electrode active material layer may, in addition to the negative electrode active material, optionally further include a binder, a conductive agent, a filler, and the like, if necessary.

The current collector is not particularly limited as long as it has high conductivity without causing a chemical change in the battery, and, for example, copper, stainless steel, aluminum, nickel, titanium, calcinated carbon, or copper or stainless steel of which surface is treated with carbon, nickel, titanium, silver, or the like, an aluminum-cadmium alloy, or the like may be used. Further, the current collector may generally have a thickness of $3\,\mu m$ to $500\,\mu m$. Also, the current collector may have fine protrusions and depressions formed on a surface thereof to enhance adherence of an active material. For example, the current collector may be used in various forms such as a film, a sheet, a foil, a net, a porous body, a foaming body, and a non-woven fabric structure.

The positive electrode active material may further include a typical positive electrode active material in addition to the lithium-rich and manganese-rich oxide described above, and for example, it may further include any one or more positive electrode active materials selected from the group consisting of LCO($LiCoO_2$), LNO($LiNiO_2$), LFP($LiFePO_4$) and NCM($Li[Ni_pCo_qMn_{r1}]O_2$ (where $0 < p < 1$, $0 < q < 1$, $0 < r1 < 1$, $p+q+r1=1$), but preferably, it may include at least 70% by weight or more of the lithium-rich and manganese-rich oxide based on the weight of the total positive electrode active material, and may be composed solely of the lithium-rich and manganese-rich oxide.

The positive electrode active material may be included in an amount of 80% to 99% by weight based on the total weight of the positive electrode active material layer.

In a specific embodiment, the negative electrode may include, as a negative electrode active material, at least one selected from the group consisting of a carbon-based material; a silicone-based material; metal or an alloy of lithium and the metal; a metal composite oxide; a material which may be doped and undoped with lithium; lithium metal; and a transition metal oxide, and preferably, it may include a carbon-based material, a silicon-based material, or a mixture thereof.

As the carbon-based material, any carbon-based negative electrode active material generally used in a lithium secondary battery may be used without particular limitation, and, as a typical example thereof, crystalline carbon, amorphous carbon, or both thereof may be used. Examples of the crystalline carbon may include graphite such as amorphous, planar, flaky, spherical or fibrous natural graphite or artificial graphite, and examples of the amorphous carbon include soft carbon (low-temperature calcined carbon), hard carbon, mesophase pitch carbide, and calcined cokes.

The silicon-based material is at least one selected from Si, $SiO_x$ ($0<x<2$), and a Si-Y alloy (where Y is an element selected from the group consisting of alkali metal, alkaline earth metal, a Group 13 element, a Group 14 element, transition metal, a rare earth element, and a combination thereof, and is not Si), and SiO is preferred. Silicon-based negative electrode active materials have a capacity nearly 10 times higher than that of graphite, and thus can lower the mass loading ($mg \cdot cm^{-2}$) to improve the rapid charging performance of batteries.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al and Sn, or an alloy of lithium and the metal may be used.

As the metal composite oxide, at least one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$($0 \leq x \leq 1$), $Li_xWO_2$($0 \leq x \leq 1$), and $Sn_xMe_{1-x}Me'_yO_z$ (where Me is Mn, Fe, Pb, Ge; Me': Al, B, P, Si, Group I, II and III elements of the periodic table, halogen; $0<x \leq 1$; $1 \leq y \leq 3$; $1 \leq z \leq 8$) may be used.

The material which may be doped and undoped with lithium may include Sn, $SnO_2$, Sn-Y (where Y is an element selected from the group consisting of an alkali metal, an alkaline earth metal, a Group 13 element, a Group 14 element, a transition metal, a rare earth element, and a combination thereof, and is not Sn), or the like, and at least one of these may be mixed and used with $SiO_2$.

In the Si-Y and Sn-Y, the element Y may be elected from the group consisting of Mg, Ca, Sr, Ba, Ra, Sc, Y, Ti, Zr, Hf, Rf, V, Nb, Ta, Db(dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide may include lithium-containing titanium composite oxide (LTO), vanadium oxide, lithium vanadium oxide, or the like.

The negative electrode active material may be included in an amount of 80% to 99% by weight based on the total weight of solids in the negative electrode slurry.

The binder is a component that assists in the binding between the conductive material, the active material, and the current collector, and is added in an amount of 0.1% to 10% by weight based on the total weight of the active material layer. Examples of the binder may include polyvinylidene fluoride(PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, ethylene-propylene-diene polymer(EPDM), a sulfonated-EPDM, a styrene-butadiene rubber, a nitrile-butadiene rubber, a fluoro rubber, various copolymers thereof, or the like.

The conductive material is a component for further improving the conductivity of the active material, and may be added in an amount of 10% by weight or less, specifically 5% by weight or less based on the total weight of the active material layer. Such a conductive material is not particularly limited as long as it has conductivity without causing a chemical change in the battery, and, for example, graphite such as natural graphite or artificial graphite; carbon black such as acetylene black, Ketjen black, channel black, furnace black, lamp black, or thermal black; conductive fibers such as carbon fibers or metal fibers; carbon fluoride; metal powders such as aluminum, and nickel powders; conductive whiskers such as zinc oxide whiskers and potassium titanate whiskers; conductive metal oxide such as titanium oxide; a conductive material such as polyphenylene derivatives, and the like may be used.

Meanwhile, the lithium secondary battery may be provided by forming an electrolyte layer (or electrolyte-containing layer) between the positive electrode and the negative electrode without a separate separator, but may further include a separator interposed between the positive electrode and the negative electrode. Such a separator is to separate the negative electrode and the positive electrode and provide a movement path for lithium ions, and any separator may be used without particular limitation as long as it is a separator commonly used in a lithium secondary battery. Particularly, a separator having high moisture-retention ability for an electrolyte as well as low resistance to ion movement in the electrolyte is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Further, a typical porous nonwoven fabric, for example, a nonwoven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a single-layered or a multi-layered structure.

In addition, the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

In a specific embodiment, the electrolyte may include an organic solvent and a lithium salt.

Any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond, an aromatic ring or ether bond); amides such as dimethylformamide; dioxolanes such as 1,3-dioxolane; sulfolanes, or the like can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which can increase charging/-discharging performance of a battery, is more preferable.

The lithium salt can be used without particular limitation as long as it may provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$. As the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$ or the like may be used. The lithium salt may be used in a concentration range of 0.1M to 2.0M. When the concentration of the lithium salt is included within the above range, the electrolyte has suitable conductivity and viscosity, thereby exhibiting excellent electrolyte performance, and lithium ions can effectively move.

Meanwhile, in the activation method of one embodiment described herein, the lithium secondary battery is subjected to initial charging for activation, and this initial charging is performed using a CC-CV charging method.

In such a CC-CV charging method, constant current(CC) charging is performed to the lithium secondary battery while maintaining the charging current constant up to a predetermined state of charge (%SOC), and then constant voltage (CV) charging is performed while maintaining the charging voltage constant from the predetermined state of charge.

First, the constant current charging is performed, for example, up to a state of charge of 50% to 95%, and by this constant current charging, the voltage suitable for activation of the rock salt phase included in the lithium-rich and manganese-rich oxide-based positive electrode active material, for example, a charging voltage of 4.3 V or more, or 4.4 V to 4.7 V, or 4.5 V to 4.65 V, is reached.

Subsequently, constant voltage charging is performed while maintaining such a constant charge voltage, for example, a voltage of 4.3 V or more, or 4.4 V to 4.7 V, and during this process, the rock salt phase may be activated to achieve high capacity characteristics. In particular, this constant voltage charging can be ended at a time point when the activation charge depth defined by Equation 1 becomes about 5.17% to 15.00%, or about 6.00% to 14.00%, or about 7.00% to 13.00%. In a specific example, the constant voltage charging may be started, for example, at a state of charge (SOC) of 50% to 95% and performed until a constant state of charge is reached, and can be ended at a time point when the activation charge depth reaches a constant value.

In this case, the activation charge depth may be defined as the ratio of the charge capacity charged in the constant voltage charging section based on the total charge capacity of the **activation step** charged in the constant current charging section and the constant voltage charging section. This activation charge depth can mean the ratio of an appropriate constant voltage charging section in the initial charging step for activation. When the activation charge depth satisfies a certain ratio, the ratio of progress of the constant voltage charging section is optimized, so that the activation of the rock salt phase contained in the lithium-rich and manganese-rich oxide-based positive electrode active material may be performed to an optimized degree. As a result, while the high capacity characteristics of the lithium secondary battery are exhibited, the occurrence of abnormal operation during driving of the battery can be suppressed.

Meanwhile, in another embodiment of the present disclosure, the constant voltage charging may be performed so that the CV charging ratio defined by the following Equation 2 is 27% to 40%, or 27% to 38%, or 27% to 35%, and is preferably ended at a time point when the CV charging ratio is satisfied:

$$\text{CV charging ratio (\%)} = (\text{Charging time of the CV charging section} / \text{Total charging time of the activation step}) * 100 \qquad \text{[Equation 2]}$$

In addition, the constant current charging before the constant voltage charging may be performed at a time ratio of 60% to 73%, or 62% to 73%, or 65% to 73% based on the total charging time of the activation step, which is the total progress time of the constant current charging and the constant voltage charging, in consideration of the appropriate time ratio of the constant voltage charging section defined by Equation 2.

For reference, due to the characteristics of the lithium-rich and manganese-rich oxide-based positive electrode active material, if the time ratio of the activation charging process under high voltage becomes too long, an excessive amount of activation gas may be generated while oxygen being desorbing within the positive electrode crystal structure, or a large amount of transition metals such as manganese may be eluted within the positive electrode.

However, as can be seen through Examples, etc. provided hereinafter, it has been confirmed that by optimizing the time ratio of the constant voltage(CV) charging section defined by Equation 2 and the time ratio of the remaining constant current(CC) charging section, the manganese-rich oxide-based positive electrode active material, for example, the rock salt-structured compound, can be effectively activated, thereby exhibiting higher capacity characteristics, while reducing the amount of gas generation and the amount of elution of transition metals such as manganese in the activation process. It has also been confirmed that a lithium secondary battery passed through this activation process can exhibit excellent discharge capacity and voltage along with low resistance.

On the contrary, if the time ratio of the constant voltage(CV) charging is very small, the amount of gas generation and the amount of transition metal elution during the activation process may significantly increase, which can lead to a significant increase in the resistance of the lithium secondary battery. Unlike the same, if the time ratio of the constant voltage(CV) charging is very large, the capacity characteristics of the lithium secondary battery may not be sufficient due to overvoltage.

Meanwhile, after the initial charging performed by the CC-CV charging method, a step of initially discharging the lithium secondary battery may be further performed. Such an initial discharging step can be performed from a maximum charging voltage at which the constant voltage charging has progressed, for example, a maximum charging voltage of 4.3V or more, or 4.4V to 4.7V, or 4.5V to 4.65V, to a minimum charging voltage of 2.0V to 3.5V.

In addition, the activation step including the initial charging and initial discharging as described above may be performed at a temperature of 20°C to 55°C, or 25°C to 50°C.

Further, in the activation step, the initial charging step may be performed at a charging rate of 0.2 C to 1.2 C, and the initial discharging step may be performed at a discharging rate of 0.4 C to 1.2 C, or 0.5 C to 1.1 C. In a more specific example, the constant current charging of the initial charging step may be performed, for example, at a charging rate of 0.2C to 1.2C, or 0.3C to 1.1C. Further, the subsequent constant voltage charging may be performed, for example, at a charging rate of 0.2C or more, or 0.3C to 0.8C, or 0.3C to 0.6C. Further, the constant voltage charging may be performed until the current value reaches 0.01C to 0.15C.

Thereby, it is possible to effectively activate the lithium secondary battery including the lithium-rich and manganese-rich oxide-based positive electrode active material and also effectively reduce the amount of gas generation and the amount of transition metal elution during the activation process.

Meanwhile, the activation method of one embodiment described herein may further comprise a step of aging the lithium secondary battery after the initial charging/discharging steps or between the steps, if necessary.

In addition, according to a specific embodiment of the disclosure, the activation method of one embodiment described herein may further optionally comprise a step of performing second constant current charging to the lithium secondary battery after the initial charging/discharging step; and/or a step of aging the lithium secondary battery at a temperature of 40°C or more.

More specifically, the activation method may further comprise, for example, a step of performing secondary constant current charging, for example, until a state of charge of 70% or 60% is reached, and this secondary constant current charging step may be performed, for example, at a charging rate of 0.3C or more, or 0.3C to 1.0C.

Further, after the secondary constant current charging step, for example, a step of aging the lithium secondary battery at a temperature of 40°C or more, or 40 to 70°C, for 10 to 30 hours, or 12 to 20 hours may be further performed. Thereby, the effect of the activation method can be further enhanced.

According to the activation method of one embodiment described herein, it is possible to effectively activate a lithium secondary battery including a lithium-rich and manganese-rich oxide-based positive electrode active material, achieve the capacity characteristics of the positive electrode active material, reduce the amount of gas generation and the amount of transition metal elution in the activation process, and suppress the abnormal driving cycle of the lithium secondary battery, thereby enabling stable driving thereof.

Hereinafter, preferred examples are provided in order to assist in the understanding of the invention, however, the following examples are for illustrative purposes only, and it is obvious to those skilled in the art that various changes and modifications may be made within the category and technological ideas of the present disclosure, and such changes and modifications also fall within the scope of the attached claims.

**[Preparation Example]: Manufacture of lithium secondary battery**

A lithium-rich and manganese-rich oxide having a composition of $Li_{1.16}Ni_{0.305}Co_{0.004}Mn_{0.531}O_2$ as a positive electrode active material, carbon black as a conductive material, and polyvinylidene fluoride as a binder were added in a weight ratio of 96.6:2.1:1.3 to N-methyl-2-pyrrolidone(NMP) as a solvent to prepare a positive electrode slurry (solid content: 75.5 wt.%). The positive electrode slurry was coated onto a positive electrode current collector (Al thin film) with a thickness of $12\mu m$, dried, and roll-pressed to produce a positive electrode.

Graphite as a negative electrode active material, SBR-CMC as a binder, and carbon black as a conductive material were added in a weight ratio of 95.7:2.3:2.0 to water as a solvent to prepare a negative electrode slurry (solid content: 60 wt.%). The negative electrode slurry was coated onto a copper(Cu) thin film as a negative electrode current collector with a thickness of $8\mu m$, and dried, followed by roll pressing to produce a negative electrode.

The electrolyte was prepared by mixing ethylene carbonate(EC): ethyl methyl carbonate(EMC): diethyl carbonate(DEC) in a volume ratio of 20:70:10 and then dissolving $LiPF_6$ to a concentration of 1.2 M.

The positive electrode, the polyolefin-based porous separator coated with inorganic particles($Al_2O_3$), and the negative electrode were sequentially stacked to prepare an electrode assembly. The assembled electrode assembly was housed in a pouch-type battery case, and the prepared nonaqueous electrolyte was injected to manufacture a lithium secondary battery.

**Example 1.**

The lithium secondary battery manufactured in Preparation Example was connected to a PNE charger/discharger, and was charged to a state of charge (SOC) of 60% at a rate of 1.0C at 45°C, followed by initial charging for activation at a rate of 0.4 C. In this initial charging, first, the lithium secondary battery was subjected to constant current charging while maintaining a charge current of 0.4C until a state of charge(SOC) of 91.53% and a charge voltage of 4.6V were reached. This constant current charging was performed by a time ratio of 70.8% based on the total charging time of the activation step.

After reaching the charging voltage of 4.6V, constant voltage charging was performed while maintaining this charge voltage. This constant voltage charging was performed by a time ratio of 29.2% based on the total charging time of the activation step including the constant current charging and the constant voltage charging, and the charging was performed at a temperature of 45°C until the current value reached from 0.4C to 0.05C, and then ended after the time ratio had elapsed. It was also confirmed that the charging was ended at a time point when the charging capacity of the constant voltage charging section was about 8.47% based on the total charging capacity of 100% by the constant current charging and the constant voltage charging, and the activation charge depth according to Equation 1 was about 8.47%. The state of charge at the time point of end was 100%.

Then, constant current discharging was performed to 2.0V at a discharge rate of 0.4 C at 45°C to proceed the activation process of the lithium secondary battery.

**Example 2.**

The lithium secondary battery manufactured in Preparation Example was connected to a PNE charger/discharger, and was charged to a state of charge (SOC) of 60% at a rate of 1.0C at 45°C, followed by initial charging for activation at a rate of 0.4 C. In this initial charging, first, the lithium secondary battery was subjected to constant current charging until a state of charge (SOC) of 91.53% and a charge voltage of 4.6V were reached, while maintaining a charge current of 0.4C. This constant current charging was performed by a time ratio of 64.7% based on the total charging time of the activation step.

After reaching the charging voltage of 4.6V, constant voltage charging was performed while maintaining this charge voltage. This constant voltage charging was performed by a time ratio of 35.3% based on the total charging time of the activation step including the constant current charging and the constant voltage charging, and the charging was performed at a temperature of 45°C until the current value reached from 0.4C to 0.05C, and then ended after the time ratio had elapsed. It was also confirmed that the charging was ended at a time point when the charging capacity of the constant voltage charging section was about 12.00% based on the total charging capacity of 103.5% by the constant current charging and the constant voltage charging (in this case, the total charging capacity was calculated and displayed as a ratio based on the total charge capacity of Example 1), and the activation charge depth according to Equation 1 was about 11.59% (=12.00/103.5*100). The state of charge at the time point of end was 103.5%.

Then, constant current discharging was performed to 2.0 V at a discharge rate of 0.4 C at 45°C to proceed the activation process of the lithium secondary battery.

**Comparative Example 1.**

The lithium secondary battery manufactured in Preparation Example was connected to a PNE charger/discharger, and was charged to a state of charge (SOC) of 60% at a rate of 1.0C at 45°C, followed by initial charging for activation at a rate of 0.4 C. In this initial charging, first, the lithium secondary battery was subjected to constant current charging until a state of charge (SOC) of 91.53% and a charge voltage of 4.6V were reached, while maintaining a charge current of 0.4C. This constant current charging was performed by a time ratio of 73.7% based on the total charging time of the activation step.

After reaching the charging voltage of 4.6V, constant voltage charging was performed while maintaining this charge voltage. This constant voltage charging was performed by a time ratio of 26.3% based on the total charging time of the activation step including the constant current charging and the constant voltage charging, and the charging was performed at a temperature of 45°C until the current value reached from 0.4C to 0.05C, and then ended after the time ratio had elapsed. It was also confirmed that the charging was ended at a time point when the charging capacity of the constant voltage charging section was about 4.16% based on the total charging capacity of 95.69% by the constant current charging and the constant voltage charging (in this case, the total charging capacity was calculated and displayed as a ratio based on the total charge capacity of Example 1), and the activation charge depth according to Equation 1 was about 4.35% (=4.16/95.69*100). The state of charge at the time point of end was 95.69%.

Then, constant current discharging was performed to 2.0 V at a discharge rate of 0.4C at 45°C to proceed the activation process of the lithium secondary battery.

**Test Example 1: Evaluation of driving characteristics and capacity retention for each cycle**

The lithium secondary batteries manufactured through the activation process in Examples and Comparative Examples were charged to 4.35 V at a temperature of 45°C under the conditions of 1/3C CC-CV (CV 5%), and then discharged to 2.0 V under the conditions of 1/3C CC, thereby conducting the charge and discharge test. While conducting such charge and discharge tests, the driving characteristics and capacity retention for each cycle were evaluated, and the evaluation results were compared and shown in FIG. 1.

Referring to FIG. 1, in Comparative Example 1, the generation of an abnormal operation phenomenon was confirmed in which the capacity retention during the initial cycle driving exceeded 100%. This is expected to be because the rock salt phase of the positive electrode active material was not properly activated during the activation process, and abnormal activation occurred in a cycle driving process.

In comparison, it was confirmed that Examples 1 and 2 showed a high capacity retention of 90% or more up to 100 cycles, but were driven stably without causing the abnormal driving phenomenon.

**Test Example 2: Evaluation of the amount of gas generation and the amount of transition metal elution**

For the lithium secondary batteries manufactured through the activation process in Examples and Comparative Examples, the gas generated in the activation process was collected and the amount of gas generated was quantitatively analyzed using GC-FID/TCD. The analysis results of the amount of activated gas generated are converted into a ratio based(100%) on Example 1 and shown in Table 1 below.

In addition, the elution amount (mg/kg) of transition metals (nickel and manganese) during the activation process was analyzed by ICP and is shown in Table 1 below.

[Table 1]

| | Activated gas (%) | Elution amount (mg/kg) of transition metals (Ni+Mn) mg/kg |
|---|---|---|
| Comparative Example 1 | 151.4 | 360 |
| Example 1 | 100.0 (based) | 75 |
| Example 2 | 89.4 | 60 |

Referring to Table 1, it was confirmed that Examples 1 and 2 are manufactured through an activation process in which the ratio of progress of the constant voltage section (time ratio of the CV charging section) defined by Equation 2 is optimized, and therefore show lower gas generation and transition metal elution amounts than Comparative Example 1.

## Claims

1. A method for activating a lithium secondary battery comprising a positive electrode, a negative electrode and an electrolyte, wherein the lithium secondary battery includes a positive electrode active material made of lithium metal oxide containing 50 mol% or more and less than 100 mol% of manganese based on the total metal content excluding lithium, the method comprising a step of:

   activating the lithium secondary battery by a CC-CV charging method in which constant current (CC) charging is performed until a specified state of charge (%SOC) is reached, and then constant voltage (CV) charging is performed,
   wherein the CC-CV charging of the activation step is ended at a time point when the activation charge depth defined by the following equation 1 becomes 5.17% to 15.00%:

   Activation charge depth (%) = (Charge capacity of the CV charge section / Total charge capacity of the activation step) * 100          [Equation 1]

2. The method for activating a lithium secondary battery according to claim 1, wherein the lithium metal oxide includes a compound represented by the following Chemical Formula 1:

   [Chemical Formula 1]          $Li_a[Mn_{1-b-c}Ni_bM_c]_{2-a}O_2$

   wherein in Chemical Formula 1,

   M is at least one selected from the group consisting of Co, Fe, Cr, V, Cu, Zn, Ti, Al, Mg, B, W, Ga, In, Ru, Nb, Sn, Sr and Zr, and
   a, b, and c are atomic fractions of each independent elements, wherein $1<a$, $0\leq b\leq0.5$, $0\leq c\leq0.5$, and $0<b+c\leq0.5$.

3. The method for activating a lithium secondary battery according to claim 1, wherein the lithium metal oxide includes a compound represented by the following Chemical Formula 2:

   [Chemical Formula 2]          $X*Li_2MnO_3\cdot(1-X)*Li[Ni_{1-y-z-w}Mn_yCo_zM_w]O_2$

   wherein in Chemical Formula 2,
   M is at least one selected from the group consisting of Fe, Cr, V, Cu, Zn, Ti, Al, Mg, B, W, Ga, In, Ru, Nb, Sn, Sr and Zr, wherein $0.2\leq X\leq0.5$, $0.4\leq y<1$, $0\leq z\leq0.1$, and $0\leq w\leq0.2$.

4. The method for activating a lithium secondary battery according to claim 3, wherein the lithium metal oxide includes $Li_2MnO_3$ having a rock salt structure and $Li[Ni_{1-y-z-w}Mn_yCo_zM_w]O_2$ having a layered structure in a mixed state.

5. The method for activating a lithium secondary battery according to claim 1, wherein the constant current (CC) charging is performed until the state of charge (SOC) of 50% to 95% is reached.

6. The method for activating a lithium secondary battery according to claim 1, wherein the constant voltage (CV) charging is started and performed at a state of charge (SOC) of 50% to 95%, and
the charging is ended at a time point when the activation charge depth defined by Equation 1 becomes 5.17% to 15.00%.

7. The method for activating a lithium secondary battery according to claim 1, wherein the constant current (CC) charging is performed until a charging voltage of 4.3V or more is reached.

8. The method for activating a lithium secondary battery according to claim 1, wherein the constant voltage (CV) charging is performed under a voltage of 4.4 V to 4.7 V.

9. The method for activating a lithium secondary battery according to claim 7, wherein the constant voltage charging is ended at a time point when the CV charging ratio defined by the following Equation 2 becomes 27% to 40%:

CV charging ratio (%) = (Charging time of the CV charging section / Total charging time of the activation step) * 100          [Equation 2]

10. The method for activating a lithium secondary battery according to claim 9, wherein the constant current charging is performed for a time for reaching 60% to 73% of the total charging time of the activation step.

11. The method for activating a lithium secondary battery according to claim 1, wherein the activation step further comprises a step of performing initial discharge after the end of the CC-CV charging.

12. The method for activating a lithium secondary battery according to claim 11, wherein the activation step is performed between a minimum discharge voltage of 2.0 V to 3.5 V and a maximum charge voltage of 4.4 V to 4.7 V.

13. The method for activating a lithium secondary battery according to claim 11, wherein the constant current charging is performed at a charging rate of 0.2C to 1.2C, and the constant voltage charging is performed until the current value reaches 0.01C to 0.15C, and
the initial discharge is performed at a discharge rate of 0.4C to 1.2C.

14. The method for activating a lithium secondary battery according to claim 1, wherein the activation step is performed at a temperature of 20°C to 55°C.

15. The method for activating a lithium secondary battery according to claim 11, wherein after the initial discharge step, the method further comprises steps of subjecting the lithium secondary battery to secondary constant current charging; and aging the lithium secondary battery at a temperature of 40°C or more.

[FIG. 1]

## INTERNATIONAL SEARCH REPORT

| International application No. |
|---|
| **PCT/KR2024/015942** |

| A. | CLASSIFICATION OF SUBJECT MATTER |
|---|---|

**H01M 10/058**(2010.01)i; **H01M 10/44**(2006.01)i; **H01M 10/052**(2010.01)i; **H01M 4/04**(2006.01)i; **H01M 4/505**(2010.01)i; **H01M 4/525**(2010.01)i; **H01M 4/1391**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/058(2010.01); H01M 10/04(2006.01); H01M 10/052(2010.01); H01M 4/1391(2010.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 활성화(activation), 충전(charge), SOC, 정전류(constant current), 정전압(constant voltage)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0049043 A (LG ENERGY SOLUTION, LTD.) 12 April 2023 (2023-04-12) See paragraphs [0012]-[0038] and figure 1. | 1-15 |
| A | KR 10-2020-0058906 A (LG CHEM, LTD.) 28 May 2020 (2020-05-28) See paragraphs [0017], [0039] and [0043]. | 1-15 |
| A | KR 10-2022-0125578 A (LG ENERGY SOLUTION, LTD.) 14 September 2022 (2022-09-14) See claims 1-12. | 1-15 |
| A | KR 10-2021-0142485 A (LG ENERGY SOLUTION, LTD.) 25 November 2021 (2021-11-25) See claims 1-13. | 1-15 |
| A | KR 10-2014-0128422 A (TOYOTA JIDOSHA KABUSHIKI KAISHA) 05 November 2014 (2014-11-05) See claims 1-13. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 January 2025** | **21 January 2025** |

| Name and mailing address of the ISA/KR | Authorized officer |
|---|---|
| **Korean Intellectual Property Office** **Government Complex-Daejeon Building 4, 189 Cheongsaro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/015942** |

| Patent document cited in search report | | | Publication date (day/month/year) | Patent family member(s) | | | Publication date (day/month/year) |
| --- | --- | --- | --- | --- | --- | --- | --- |
| KR | 10-2023-0049043 | A | 12 April 2023 | CA | 3227797 | A1 | 13 April 2023 |
| | | | | CN | 117616612 | A | 27 February 2024 |
| | | | | EP | 4366018 | A1 | 08 May 2024 |
| | | | | JP | 2024-520547 | A | 24 May 2024 |
| | | | | WO | 2023-059069 | A1 | 13 April 2023 |
| KR | 10-2020-0058906 | A | 28 May 2020 | CN | 112272880 | A | 26 January 2021 |
| | | | | CN | 112272880 | B | 28 June 2024 |
| | | | | EP | 3783727 | A1 | 24 February 2021 |
| | | | | EP | 3783727 | B1 | 12 April 2023 |
| | | | | KR | 10-2505723 | B1 | 03 March 2023 |
| | | | | US | 11876191 | B2 | 16 January 2024 |
| | | | | US | 2021-0210802 | A1 | 08 July 2021 |
| | | | | WO | 2020-105974 | A1 | 28 May 2020 |
| KR | 10-2022-0125578 | A | 14 September 2022 | None | | | |
| KR | 10-2021-0142485 | A | 25 November 2021 | CN | 115039257 | A | 09 September 2022 |
| | | | | CN | 115039257 | B | 09 February 2024 |
| | | | | EP | 4084130 | A1 | 02 November 2022 |
| | | | | US | 2023-0064213 | A1 | 02 March 2023 |
| | | | | WO | 2021-235818 | A1 | 25 November 2021 |
| KR | 10-2014-0128422 | A | 05 November 2014 | CN | 104115326 | A | 22 October 2014 |
| | | | | CN | 104115326 | B | 24 August 2016 |
| | | | | EP | 2816657 | A1 | 24 December 2014 |
| | | | | EP | 2816657 | B1 | 16 August 2017 |
| | | | | JP | 5907395 | B2 | 26 April 2016 |
| | | | | KR | 10-1635300 | B1 | 30 June 2016 |
| | | | | US | 10128547 | B2 | 13 November 2018 |
| | | | | US | 2015-0037669 | A1 | 05 February 2015 |
| | | | | WO | 2013-121563 | A1 | 22 August 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230151843
- KR 1020230162051

- KR 1020240142767